# EUROPEAN PATENT SPECIFICATION

(11) **EP 1 786 665 B1**
(45) Date of publication and mention of the grant of the patent: **02.06.2010**
(21) Application number: 05774463.3
(22) Date of filing: 11.08.2005
(51) Int. Cl.: B63H 9/06, B63B 1/10

(54) **A TRANSPORTATION VEHICLE**
TRANSPORTFAHRZEUG
VEHICULE DE TRANSPORT

(30) Priority: 11.08.2004 TR 200402003
(43) Date of publication of application: 23.05.2007
(73) Proprietor: Isikman, Feyzi Murat, Bodrum, Mugla (TR)
(72) Inventor: Isikman, Feyzi Murat, Bodrum, Mugla (TR)
(74) Representative: Berkkam, Ayfer
(86) International application number: PCT/IB2005/052674
(87) International publication number: WO 2006/035323

(56) References cited:
- WO-A-01/32500
- DE-A1- 1 816 794
- GB-A- 2 334 004
- GB-A- 2 336 823
- US-B1- 6 675 735

## Description

### Technical Field

This invention relates to a transportation vehicle which is used in transporting passengers and/or goods, which utilizes wind power and the elevating force of water and which has a passenger cabin that moves above water level.

### Prior Art

In the state of art, transportation vehicles which travel on water stay above water level due to elevating force and travel on water level by means of the drive created by the propellers located below water level and/or the sails located above water level. By means of the sails, the vehicle can travel by utilizing wind power without consuming any solid/liquid/gas fuels.

However, in known vehicles, the drag force created by water is greater as the body of the transportation vehicle contacts water; as a result, more power is necessary to actuate this mass. Apart from this, the vehicle loses balance as wind power increases due to the fact that the drag vectors of the sails are above the balance center of the vehicle.

For solving this problem and the like certain suggestions have been made in the art. Among these, in the New Zealand patent application NZ516114 a sail is utilized having a rotation axis fixed to the body which contacts water surface. Herein, different from the traditional structure, wings placed on both sides of the body which help maintain balance are used..

Whereas, in the embodiment disclosed in site with the URL address http://foxxaero.homestead.com/indsail 028.html a parachute is attached to the body of the freight vessel in order to ensure fuel economy. In this embodiment the angle of the parachute is adjusted according to the direction of the wind by controlling it by means of a computer.

A sail wing is attached to the boat (Flying Boat) disclosed in internet site with URL address http://www.seair.com/. In this way, the boat takes off after reaching a certain speed by accelerating by means of the engine at the rear end and flies similar to an airplane. Thus, it would be more appropriate to regard this as a double function vehicle which can both travel on sea and air. In this vehicle, benefiting simultaneously from water and wind power is not aimed.

The boat called the Dingbat, which can be seen in the internet site with the URL h ttp://foxxaero.homestead.com/indsail 26.html and which is designed by Bill Rayner and Clif Barker, utilizes a wing attached to the body by means of a metal connection and a mechanism similar to a glider composed of a tail and a rudder located underwater at the rear end of the boat is used. In this way, the boat can travel by means of wind power without requiring any other power and can be directed by means of the tail located underwater. By elevating from water level the wet surfaces of the boat decreases as its speed increases. Only the tail contacts water when highest amount of speed is attained.

The document GB 2336823, which is considered to be the closest prior art, discloses a wind-powered craft with a said, a passenger platform and a propulsion under water unit.

Although utilizing wind power by using different sail types or traveling above water level as stated above is ensured, not any invention has disclosed a vehicle which enables large dimensioned freight or passenger vessels to travel solely with wind power, with a performance similar to a motor-vehicle and also above water level.

Furthermore, in vehicles which utilize wind power problems of overbalance arising from the increases in wind power have not been encountered.

### Brief Description of the Invention

The object of the invention is to realize a transportation vehicle which has a body which is minimally affected from wave vibrations and surface currents.

Another object of this invention is to realize a transportation vehicle which utilizes wind power much more effectively.

Yet another object of this invention is to realize a transportation vehicle which can maintain its balance in spite of high wind speeds.

The transportation vehicle realized in order to attain the objects of this invention comprises at least one main body which travels at a certain height above water level; an air unit comprising at least one sail which extends perpendicularly to the water surface and which is connected to this main body; and at least one underwater unit which travels underwater and which is again connected to the main body.

The transportation vehicle utilizes wind power by means of its air unit, and water by means of its underwater engine.

A comfortable journey is provided for passengers as the body of the transportation vehicle, which is the subject of the invention, travels above water level. Furthermore, the pleasures of both flying and sailing can be experienced when the vehicle is solely used for traveling. Moreover, it is economical as excessive fuel consumption is prevented.

### Detailed Description of the Invention

The transportation vehicle realized in order to attain the objects of this invention is illustrated in the accompanying figure, wherein;

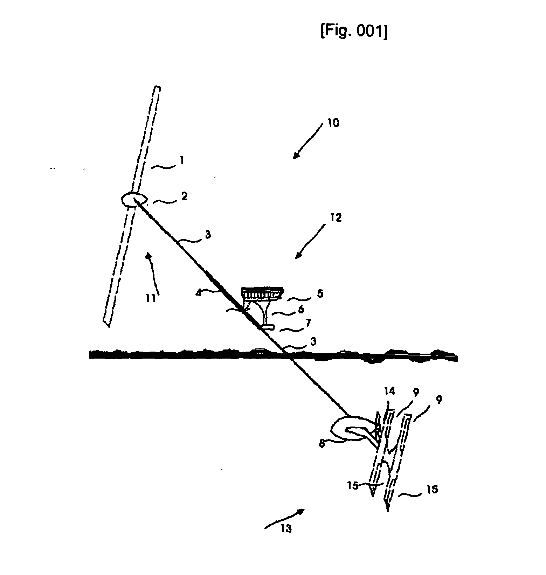

Figure 1 - is a schematic view of the transportation vehicle which is the subject of the invention.

The components in the figures have each been numbered corresponding the following:
1. Sail
2. Sail depot
3. Connection components
4. Casing
5. Passenger cabin
6. Compartment
7. Casing depot
8. Cover
9. Wing
10. Transportation vehicle
11. Air unit
12. Main body
13. Underwater unit
14. Propeller
15. Flap

The transportation vehicle (10), which is the subject of the invention, consists of three units: an air unit (11), a main body (12) and an underwater unit (13).

The air unit (11) is used in obtaining drive from wind power. The air unit (11) is composed of at least one sail (1) which extends substantially perpendicular to water level and which ensures drive, and at least one sail depot (2) wherein the sail (1) is attached.

The sail (1) is a surface which resembles airplane/glider wings and which could create a drive aerodynamically. This sail (1) can have any aerofoil cross-section used frequently in air crafts or a dint plate shape. In the preferred embodiment of the invention, there are two sails (1) attached to both sides of the depot (2). However, in different embodiments of the invention, it is also possible to have more than one sails which are placed parallel to each other, and one over the other and/or one behind the other at definite gaps. Dimension of each sail can be different or identical when more than one sail is used. The sail has a structure comprising a plastic framework which is preferably inflated by means of compressors, wherein there are canals which form appropriate wing profile when they receive wind, and has a similar structure to a paraglider, and can be shortened or extended to both sides.

However, in the alternative embodiments of the invention, it is also possible to produce the sail from a fabric having suitable characteristics which is attached to the rigid framework. It can also be produced of a completely rigid material such as metal, plastic or composite.

The sail (1) can be elevated to different heights (h) in order to prevent it from being effected from storm and similar weather conditions. However, positioning the sail just above the sea level and almost perpendicular to the surface is preferred.

The sail's (1) connection with the main body (12) and its mechanical control is realized by means of the depot (2). The depot (2) has a geometrical shape similar to a pointed tip ellipsoid in order to minimize the drag force. In accordance with the speed and elevation force required by the transportation vehicle (10), there are mechanisms such as, a compressor for inflating the sail, an engine, a drum whereon the sail is wrapped etc. necessary for shortening and extending the length (L) of the sail and changing the attack angle (α). In another embodiment of the invention, the sail is controlled by means of electrical cables connected to the engine/compressor. Yet in another embodiment of the invention, these operations are realized by means of radio waves sent from the passenger cabin (5) to the engine without the use of any cables.

Depot (2) is connected to the main body (6) by means of at least one connection component (3). This component (3) can be wire, tube, rope or cord. However, it is preferably steel cord.

The main body (12) is composed of a passenger cabin (5) wherein the passengers are located, a casing (4) and a casing depot (drag center) (7). In an embodiment of the invention, the main body (12) comprises a compartment (6) which ensures the connection with the underwater unit or wherein the freight is transported.

The passenger cabin (5) can have any geometrical shape; it can be produced as a disc or like an aircraft body. The formation of least amount of drag in terms of aerodynamics is aimed when the passenger cabin is being formed. In an alternative embodiment of the invention, there are wings (not shown) on both sides of the passenger cabin and a perpendicular tail (not shown) at its rear end. These wings and tails ensure an additional elevation force for the passenger cabin when the vehicle is traveling at a definite speed. Pilothouse, cabins etc. can be arranged in the passenger cabin. The passenger cabin is preferably produced from composite materials in order to provide lightness.

During travel of the passenger cabin (1) at a certain height above water level, the pressure of the compressed air between the water level and the passenger cabin increases and in this way additional elevation force is applied to the passenger cabin.

The compartment (6) located below the passenger cabin (5) is formed in order to transport freight in its own area and/or to drag the freight in another compartment such as the underwater unit (13) and/or drag the freight carriers which are similar to tag boats that remain behind the vehicle and also to carry the hydraulic mechanism which maintains the parallel position of the passenger cabin when the main body, which connects the underwater unit with the unit located above water level, inclines especially due to wind power. This compartment (6) is produced to be integrated with the passenger cabin in the best way possible to prevent the separation of air current from the surface, the occurrence of turbulences and the increase of drag force arising due to these reasons. Moreover, it is positioned just above sea level in order not to, or slightly overbalance the vehicle.

Casing (4) is a part wherein the components (3) which ensure the connection between the main body (12) and the air and underwater units (11 and 13) are joined. Preferably, it has a hollow, rigid cylindrical shape. It is fixed to the passenger cabin. The parts (cord, cable etc.) which ensure mechanic and electrical connection to the air and underwater units (11 and 13) pass through this casing (4).

One end of the casing (4) is fixed to the casing depot (7). The parts (cords, cable etc.) which ensure mechanic and electrical connection to the air and underwater units are kept and/or opened and wrapped inside this depot (7). For the said wrapping process there are rollers which can be actuated manually or by means of a motor. In the preferred embodiment of the invention, the casing depot is a disc shaped compartment fixed to the passenger cabin by means of a foot.

Underwater unit (13) comprises a cover (8), a propeller (14) located outside this cover and at least one wing (9). The cover performs functions as a balance center. Just like a submarine it comprises components such as a motor(s), a generator(s), a pump(s), ballast tank(s) etc. These components are used in controlling the depth and speed of the underwater unit. Underwater unit (13) is connected to the main body (12) by means of at least one connection component (4). This connection component (4) can be resilient or, preferably, rigid. This component shall be able to carry the main body. The depth of the underwater unit and in this way the height of the main body can be adjusted by adjusting the angle and height of the connection component. Preferably, the cable(s) which enables controlling the underwater unit also passes through this component (4). The casing has a hydrodynamic structure in order to reduce drag force. The propeller which is actuated by means of the engine creates the drive required to actuate the underwater unit.

The wings (9) of the underwater unit can be integrated with or independent from the casing. These wings (9) preferably have inverted profile and create a downward elevation force. By means of the power of the wings (9), it is aimed to neutralize the vertically directed component of the elevation force of the sail located in the air unit and to navigate the vehicle in the desired direction. The underwater unit and thus the transportation vehicle can be navigated by including components such as flaps (15) and eleron to these wings.

The underwater unit (13) is operated by lowering it to a certain depth in order to prevent it from being effected from the waves on water surface. The underwater unit which operates mainly at depths wherein laminar currents are dominant is more efficient.

Computerized and electronic components are utilized in order to facilitate the connection between certain units of the transportation vehicle.

### Industrial Applicability

When the transportation vehicle (10), which is the subject of the invention, is lying at anchor at harbor or on open water, the sails (1) are wrapped around the drum which is kept inside the sail depot (2). And during this time, the main body either floats on water or is above water level at a certain height due to the elevation force of the underwater unit.

By controlling the underwater unit from the passenger cabin the engine is actuated and drive is obtained and by means of this drive the vehicle is navigated out of the harbor. When appropriate, the underwater unit is lowered to a depth wherein it will be least effected from waves. Moreover, by adjusting the height of the connection component, the main body is elevated to a height whereon it will be least affected from waves.

Afterwards, the casing is positioned in accordance with the direction and wind. Then, the sail is released from the sail depot (2) at a certain length. When a suitable form is established by filling the framework of the sail with pressurized gas, the sail is again released at a certain length. When suitable space is formed depending on the wind, the sail and the sail depot moves with wind power. Releasing and elevating the sail continues depending on desired speed. Then a navigation position is taken wherein the sail is far from the main body as possible and its area is increased as required. Fuel consumption can be economized by turning off the engine of the underwater unit when the sails provide sufficient amount of power.

The transportation vehicle can incline forwards depending on the angle of the force formed by the sail. To prevent this forward inclination, the position of the main body is straightened by moving the underwater wings (9) to suitable positions. Or, by adjusting the resilient connections the passenger cabin and the underwater unit are positioned to be parallel to the horizon. Adjusting the angles of the wings and the sail continues throughout navigation by taking into consideration the changes in direction, wind and underwater currents.

Upon arrival to the harbor, the sails are collected and the engine of the underwater unit is actuated.

As the passenger cabin travels above water level it is not subjected to vibrations caused by waves. And the underwater unit can be lowered to any depth. It is preferred that the underwater unit is at a depth wherein it is not affected from waves. In this way, the wings (9) absorb and minimize the vibrations on the body and balance is maintained. Furthermore, as the engine and the propeller are operated in a laminar flow environment they operate with maximum efficiency. This increases the longevity of the engine and also minimizes fuel consumption.

A comfortable journey is provided for the passengers as the body of the transportation vehicle, which is the subject of the invention, travels above water level. Furthermore, passengers and freight are not affected from strong waves occurring in adverse weather conditions and they will experience minimal vibrations. Due to these reasons the invention is advantageous. Furthermore, an average of 20% saving in fuel consumption is ensured.

It is possible to develop a wide range of embodiments, and the invention is principally as disclosed in the claims and it cannot be restricted with the examples stated herein.

## Claims

1. A transportation vehicle (10) comprising;
a) an air unit (11) comprising at least one sail (1) which is above water level, which is used to obtain drive from wind power, and;
b) an underwater unit (13) which travels underwater, comprising at least one wing which maintains the balance of the vehicle by neutralizing the vertical and upward directed component of the drive vector formed by the sail, and; a main body (12) which is located between the said air unit and the underwater unit, comprising a passenger cabin (5) whereon the air unit and the underwater unit is connected, which travels above water level, and wherein passengers are carried.
**characterized in that**, the distance between the passenger cabin (5) and the air and underwater units (11 and 13), the height and the angle of the air unit (11) and the depth and the angle of the water unit (13) are adjusted by means of components (3) which are between the passenger cabin (5) and the air and underwater units, (11 and 13) are wrapped and,
the underwater unit (13) is the balance center of the transportation vehicle (10) by the way that it enables the pressure of the compressed air between the water level and the passenger cabin to increase and the additional elevation force to be applied to the passenger cabin (5).

2. A transportation vehicle as defined in claim 1 **characterized** with wings (9) by means of which the vertically directed component of the elevation force of the sail located in the air unit is neutralized to navigate the vehicle in the desired direction without losing it's balance

3. A transportation vehicle (10) as defined in claim 1 or 2 **characterized** with an air unit (11) which comprises a sail depot (2) wherein the sail (1) is attached.

4. A transportation vehicle (10) as denned in claim 1 to 3 **characterized** with an underwater unit (13) which comprises an engine which creates the drive.

5. A transportation vehicle (10) as defined in any of the claims above **characterized** with a main body (12) which comprises a casing (4) which is fixed to the passenger cabin (5) and wherein the component (3) which ensures the connection between the air and underwater units passes and a casing depot (drag center) (7) wherein the said component (3) is kept.

6. A transportation vehicle (10) as defined in any of the claims above **characterized** with two sails (1) fixed to both sides of the depot (2).

7. A transportation vehicle (10) as defined in any of the claims above **characterized** with more than one sails which are positioned parallel to each other and one over the other and/ or one behind the other at definite gaps.

8. A transportation vehicle (10) as defined in any of the claims above **characterized** with a sail comprising a plastic framework which is preferably inflated by means of compressors, canals which form appropriate wing profile when they receive wind, having a similar structure to a paraglider, and which can be shortened or extended to both sides.

9. A transportation vehicle (10) as defined in Claims 1-6 **characterized** with a sail composed of a rigid framework and a fabric attached therein.

10. A transportation vehicle (10) as defined in any of the Claims above **characterized** with a resilient connection located between the air unit and the main body.

11. A transportation vehicle (10) as defined in any of the Claims above **characterized** with a rigid or a resilient connection located between the underwater unit and the main body.

12. A transportation vehicle (10) as defined in any of the Claims above **characterized** with a main body (12) comprising a compartment (6) wherein the component, which ensure connection with the underwater unit, is located or wherein the freight is carried.

13. A transportation vehicle (10) as defined in any of the Claims above **characterized** with an underwater unit (13) which can control depth and speed as it comprises a cover (8) which protects the engine and whereon a propeller is fixed, and just like submarine, components such as a motor(s), a generator(s), a pump(s), ballast tank(s) etc.

14. A transportation vehicle (10) as defined in any of the Claims above **characterized** with computerized and electronic components to ensure the connection and the control between certain units.

15. A transportation vehicle (10) as defined in claim 1 **characterized** with a component (3) between the air unit (11) and the underwater unit (13) or the passenger cabin (5) and the underwater unit (13), the length of which can be adjusted.

## Patentansprüche

1. Ein Transportfahrzeug (10) umfassend,
a) eine Lufteinheit (11), die mindestens ein Segel aufweist (1), das über dem Wasserspiegel ist, das bei der Antriebsgewinnung durch Windkraft verwendet wird; und
b) eine Unterwassereinheit (13), die sich unter dem Wasser bewegt, aufweisend mindestens einen Flügel, der durch Neutralisierung der vertikalen und aufwärts gerichteten Komponenten des durch das Segel ausgebildeten Antriebsvektors zur Erhaltung des Gleichgewichts des Fahrzeuges dient, und; einen Hauptteil (12), der zwischen der erwähnten Lufteinheit und der Unterwassereinheit angeordnet ist, aufweisend eine Fahrgastkabine (5), die sich über dem Wasserspiegel bewegt und an welche die Lufteinheit und Unterwassereinheit angeschlossen sind und worin die Fahrgäste befördert werden; **dadurch gekennzeichnet, dass** der Abstand zwischen der Fahrgastkabine (5) und der Luft-und Unterwassereinheiten (11 und 13), die Höhe und der Winkel der Lufteinheit (11) sowie die Tiefe und der Winkel der Unterwassereinheit (13) mittels Komponenten (3) eingestellt werden, welche zwischen der Fahrgastkabine (5) und der Luft- und Unterwassereinheiten (11 und 13) eingewickelt sind und dass die Unterwassereinheit (13) einen Ausgleichspunkt des Transportfahrzeuges (10) **dadurch** darstellt, dass sie es ermöglicht, den Druck der zwischen dem Wasserspiegel und der Fahrgastkabine verdichteten Luft zu erhöhen und eine zusätzliche Auftriebskraft auf die Fahrgastkabine (5) aufzubringen.

2. Ein Transportfahrzeug wie in Anspruch 1, **gekennzeichnet durch** die Flügel (9), wodurch die vertikal gerichtete Komponente der Auftriebskraft des Segels neutralisiert wird, welches in der Lufteinheit angeordnet ist, um das Fahrzeug in die gewünschte Richtung zu steuern, ohne dabei dessen Gleichgewicht verlorengeht.

3. Ein Transportfahrzeug (10) wie in Anspruch 1 oder 2, **gekennzeichnet durch** eine Lufteinheit (11), die ein Segeldepot (2) aufweist, worin das Segel (1) angelagert ist.

4. Ein Transportfahrzeug (10) wie in Ansprüchen von 1 bis 3, **gekennzeichnet durch** eine Unterwassereinheit (13), die eine Kraftmaschine aufweist, welche den Antrieb erzeugt.

5. Ein Transportfahrzeug (10) wie in einem der oben erwähnten Ansprüchen, **gekennzeichnet durch** einen Hauptteil (12) umfassend ein Gehäuse (4), welcher an die Fahrgastkabine (5) befestigt ist und wodurch die Komponente (3) durchführt, die die Verbindung zwischen Lufteinheit und Unterwassereinheit ermöglicht und einen Gehäuselager (Widerstandszentrum) (7), worin die erwähnten Komponente (3) gehalten wird.

6. Ein Transportfahrzeug (10) wie in einem der oben erwähnten Ansprüchen, gekennzeichet durch zwei Segeln (1), die an die beiden Seiten des Depots (2) befestigt sind.

7. Ein Transportfahrzeug (10) wie in einem der oben erwähnten Ansprüchen, **gekennzeichnet durch** mehrere Segel, welche parallel zueinander, sowie eines über dem anderen und /oder eines hinter dem anderen in bestimmten Abständen aufgestellt sind.

8. Ein Transportfahrzeug (10) wie in einem der oben erwähnten Ansprüchen, **gekennzeichnet durch** ein Segel aufweisend ein Rahmenwerk aus Kunststoff, welches vorzugsweise mittels Verdichter aufgeblasen wird, sowie Kanäle, die entsprechende, eine Gleitschirm ähnliche Anordnung aufweisende Flügelprofile bilden, falls sie Wind bekommen, und welche zu beiden Seiten abgekürzt oder verlängert werden können.

9. Ein Transportfahrzeug (10) wie in Ansprüchen 1 - 6, **gekennzeichnet durch** ein Segel, welches aus einem steifen Rahmenwerk und einem darin befestigten Stoff zusammengesetzt ist.

10. Ein Transportfahrzeug (10) wie in einem der oben erwähnten Ansprüchen, **gekennzeichnet durch** eine resilierende Anbindung, die zwischen der Unterwassereinheit und dem Hauptteil angeordnet ist.

11. Ein Transportfahrzeug (10) wie in einem der oben erwähnten Ansprüchen, **gekennzeichnet durch** eine steife oder resilierende Anbindung, die zwischen der Unterwassereinheit und dem Hauptteil angeordnet ist.

12. Ein Transportfahrzeug (10) wie in einem der oben erwähnten Ansprüchen, **gekennzeichnet durch** einen Hauptteil (12) umfassend eine Kamer (6), worin die Komponente angeordnet ist, die die Verbindung mit der Unterwassereinheit ermöglicht oder worin die Fracht getragen wird.

13. Ein Transportfahrzeug (10) wie in einem der oben erwähnten Ansprüchen, **gekennzeichnet durch** eine Unterwassereinheit (13), welche die Tiefe und die Geschwindigkeit kontrollieren kann, sowie umfassend eine Abdeckung (8), welche den Motor schützt, worauf einen Propeller befestigt ist, und Bestandteile wie es bei einem Unterseeboot der Fall ist, wie einen Motor(en), einen Generator(en), eine Pumpe(n), Ballasttank(en) usw.

14. Ein Transportfahrzeug (10) wie in einem der oben erwähnten Ansprüchen, **gekennzeichnet durch** computergesteuerte und elektronische Komponente, um die Verbindung und die Kontrolle zwischen bestimmten Einheiten zu ermöglichen.

15. Ein Transportfahrzeug (10) wie in Anspruch 1, **gekennzeichnet durch** eine Komponente (3) zwischen der Lufteinheit (11) und der Unterwassereinheit (13) oder der Fahrgastkabine (5) und der Unterwassereinheit (13), deren Länge eingestellt werden kann.

## Revendications

1. Un véhicule de transport (10) comprenant ;
a) une unité d'air (11) comprenant au moins une voile (1) étant au-dessus de niveau de l'eau, utilisée pour obtenir transmission de l'énergie éolienne, et
b) une unité subaquatique (13) travaillant sous-marin comportant au moins une voile maintenant la balance du véhicule en neutralisant le composant, dirigé verticalement et vers le haut, du vecteur de conduit formé par voile, et un corps principal (12) situé entre l'unité d'air et l'unité subaquatique, comprenant une cabine passagère (10) sur laquelle l'unité d'air et l'unité subaquatique sont reliées, travaillant au-dessus de niveau de l'eau, et dans laquelle les passagers sont transportés, **caractérisé en ce que** la distance entre la cabine passagère (5) et les unités aérienne et subaquatiques (11 et 13), l'hauteur et l'angle de l'unité d'air et la profondeur et l'angle de l'unité aquatique sont réglés au moyen de composants (3) étant entre la cabine passagère (5) et les unités aérienne et subaquatiques (11 et 13), et qui sont mis sous emballage, et que l'unité subaquatique (13) est le centre de balance du véhicule de transport (10) en permettant l'augmentation de la pressure de l'air comprimé entre le niveau de l'eau et la cabine passagère et l'application d'une force d'élévation supplémentaire à la cabine passagère (5).

2. Un véhicule de transport (10) selon la revendication 1, **caractérisé en ce qu'**il consiste en voiles (9) assurant la navigation du véhicule vers la direction désirée sans dérangeant la balance du véhicule à l'aide de son composant vertical de la force d'élévation de la voile se trouvant dans l'unité d'air.

3. Un véhicule de transport (10) selon la revendication 1 ou 2, **caractérisé en ce qu'**il comporte une unité d'air (11) comprenant un dépôt de voile (2) dans lequel la voile (1) est située.

4. Un véhicule de transport (10) selon la revendication 1 ou 3, **caractérisé en ce qu'**il comporte une unité subaquatique (13) consistant en un moteur provoquant la conduite.

5. Un véhicule de transport (10) selon l'une des revendications précédentes, **caractérisé en ce qu'**il consiste en un corps principal (12) comportant un carter (4) fixé à la cabine passagère (5) dans laquelle se trouve ledit composé (3) assurant la connexion entre les unités aériennes et subaquatiques et un dépôt de carter (centre de résistance) dans lequel se trouve ledit composé (3).

6. Un véhicule de transport (10) selon l'une des revendications précédentes, **caractérisé en ce qu'**il comporte deux voiles (1) fixées de part et d'autre du dépôt (2).

7. Une véhicule de transport (10) selon l'une des revendications précédentes, **caractérisé en ce qu'**il comporte plus d'une voile situées parallèlement l'une à l'autre et/ou l'une au-dessus de l'autre et/ou l'une derrière de l'autre en certaines intervalles.

8. Un véhicule de transport (10) selon l'une des revendications précédentes, **caractérisé en ce qu'**il comporte une voile possédant un cadre plastique gonflé à l'aide d'un compresseur de préférence, ledit cadre plastique comportant des canaux formant le profil de voiles approprié quand ces dernières reçoivent le vent, lesdites voiles puissent être réduites ou prolongées de part et d'autre, ayant une structure semblable à celle de parapente.

9. Une véhicule de transport (10) selon la revendication 1 à 6, **caractérisé en ce qu'**il comporte une voile consistant en un cadre rigide dans lequel est relié le tissu.

10. Un véhicule de transport (10) selon l'une des revendications précédentes, **caractérisé en ce qu'**il comporte un raccordement résistant se trouvant entre l'unité d'air et le corps principal.

11. Un véhicule de transport (10) selon l'une des revendications précédentes, **caractérisé en ce qu'**il comporte un raccordement rigide ou résistant se trouvant entre l'unité subaquatique et le corps principal.

12. Une véhicule de transport (10) selon l'une des revendications précédentes, **caractérisé en ce qu'**elle consiste en un corps principal comportant un compartiment (6) dans lequel se trouve le composant assurant le raccordement avec l'unité subaquatique ou est supporté le poids.

13. Un véhicule de transport (10) selon l'une des revendications précédentes, **caractérisé en ce qu'**il comporte une unité subaquatique pouvant contrôler la profondeur et la vitesse puisqu'elle comprend un moteur sur lequel est fixé une hélice, et une couverture protégeant le moteur, juste comme sous-marin ayant composants tels que moteur(s), générateur(s), pompe(s), réservoir(s) de lest, etc.

14. Un véhicule de transport (10) selon l'une des revendications précédentes, **caractérisé en ce qu'**il est formé de composants informatisés et électroniques afin de permettre le contrôle et la connexion entre certaines unités.

15. Un véhicule de transport (10) selon la revendication 1, **caractérisé en ce qu'**il comprend un composant se trouvant entre la cabine passagère (5) dont longueur pourrait être ajusté et l'unité subaquatique (13) ou l'unité d'air et l'unité subaquatique (13).
